**Europäisches Patentamt**

**European Patent Office**

**Office européen des brevets**

(19)

(11) Veröffentlichungsnummer: **0 022 137**
**A1**

(12) # EUROPÄISCHE PATENTANMELDUNG

(21) Anmeldenummer: **79104992.7**

(22) Anmeldetag: **07.12.79**

(51) Int. Cl.³: **B 29 H 19/00**
**B 03 C 1/02**

(30) Priorität: **07.07.79 DE 2927567**

(43) Veröffentlichungstag der Anmeldung:
**14.01.81 Patentblatt 81 2**

(84) Benannte Vertragsstaaten:
**AT BE CH DE FR GB IT NL**

(71) Anmelder. **Deutsche Babcock Aktiengesellschaft**
**Duisburger Strasse 375**
**D-4200 Oberhausen 1(DE)**

(71) Anmelder **Portlandzementwerk Dotternhausen Rudolf**
**Rohrbach KG**

**D-7461 Dotternhausen(DE)**

(72) Erfinder **Noack, Rolf**
**Lohstrasse 91**
**D-4200 Oberhausen 1(DE)**

(72) Erfinder: **Wefing, Heinrich**
**Reichspräsidentenstrasse 21-25**
**D-4330 Mülheim(DE)**

(72) Erfinder: **König, Christian**
**Danziger Strasse 25**
**D-4280 Borken(DE)**

(72) Erfinder: **Gramelt, Stefan**
**Ohrenfeld 9**
**D-4200 Oberhausen(DE)**

(72) Erfinder **Weislehner, Gustav**
**Schömbergerstrasse 5**
**D-7461 Dotternhausen(DE)**

(72) Erfinder: **Rechmeier, Helmut**
**Breslauer Strasse 36**
**D-7460 Balingen(DE)**

(74) Vertreter: **Radünz, Ingo**
**Schumannstrasse 100**
**D-4000 Düsseldorf 1(DE)**

(54) Verfahren und Vorrichtung zum Abführen von magnetisierbaren Bestandteilen aus einem Wirbelschichtreaktor.

(57) Zum Abführen von magnetisierbaren im Einsatzgut vorhandenen Bestandteilen aus einem Wirbelschichtreaktor wird ein Elektromagnet (7) verwendet. Dieser Elektromagnet (7) wird an einem horizontal drehbaren und vertikal verfahrbaren Ruhrarm (8) durch die Wirbelschicht (5) gefuhrt. Nach einer einstellbaren Verweilzeit in der Wirbelschicht (5) wird der Rührarm (8) uber eine zuvor in die Reaktionsraum des Wirbelschichtreaktors eingeschwenkte Auswurfklappe (18) gefahren und der Erregerstrom des Elektromagneten (7) abgeschaltet Die Auswurfklappe (18) befordert, wenn sie zuruckgeschwenkt wird, die magnetisierbaren Bestandteile in einem sich seitlich an den Reaktionsraum anschließenden Schacht (15).

./...

Fig.1

Verfahren und Vorrichtung zum Abführen von magnetisierbaren Bestandteilen aus einem Wirbelschichtreaktor

Die Erfindung betrifft ein Verfahren und eine dazugehörende Vorrichtung zum Abführen von magnetisierbaren,
im Einsatzgut vorhandenen Bestandteilen aus einem
Wirbelschichtreaktor.

Ein solches Verfahren kann bei der Verwertung von Altreifen durch thermische Zersetzung und Teilverbrennung
angewendet werden. Dabei bleiben die der Armierung der
Reifen dienenden Drähte und Drahtgeflechte als unverbrennliche magnetisierbare Restbestandteile übrig.
Ein Verfahren dieser Art ist in der noch unveröffentlichten deutschen Patentanmeldung P 28 26 918. 3 beschrieben. Bei einer der dort erwähnten Ausführungsformen werden die magnetisierbaren Bestandteile mit
Hilfe eines Elektro-Hubmagneten aus der Wirbelschicht
entfernt. Auf diese Weise kann der mit den magnetisierbaren Bestandteilen aus der Wirbelschicht ausgetragene
Sandanteil gering gehalten werden. Diese Vorrichtung
hat sich im Betrieb bewährt, jedoch bereitet die Übertragung dieses Systems auf große Anlageneinheiten
Schwierigkeiten.

Der Erfindung liegt die Aufgabe zugrunde, das Austragssystem für die magnetisierbaren Bestandteile im Hinblick auf größere Anlageneinheiten zu modifizieren.

Diese Aufgabe wird gemäß der Erfindung dadurch gelöst,
daß durch die Wirbelschicht ein Elektromagnet geführt
wird, daß nach einer einstellbaren Verweilzeit der Elektromagnet vertikal aus der Wirbelschicht über eine in
den Reaktionsraum eingeschwenkte Auswurfklappe gefahren wird, daß in dieser Stellung der Erregerstrom des Elektromagneten abgeschaltet wird und daß anschließend die Auswurfklappe zurückgeschwenkt wird. Zur Durchführung eines solchen Verfahrens wird eine Vorrichtung vorgeschlagen, die dadurch gekennzeichnet ist, daß ein abschaltbarer Elektromagnet in einem Rührarm eingebaut ist, daß der Rührarm horizontal drehbar und vertikal verfahrbar ist und daß in den Reaktionsraum eine Auswurfklappe einschwenkbar ist, deren Schwenkachse sich in einer Höhe unterhalb der höchsten Stellung des Rührarmes befindet und deren Abwurfkante innerhalb eines sich seitlich an den Reaktionsraum anschließenden Schachtes vorgesehen ist.

Mit Hilfe des erfindungsgemäß ausgebildeten Elektromagneten werden die magnetisierbaren Bestandteile innerhalb der Wirbelschicht gesammelt, aus der Wirbelschicht herausgeholt und über eine einfache Auswurfvorrichtung aus dem Reaktor entfernt. Die Vorrichtung ist so ausgebildet, daß sie durch eine einfache Maßstabveränderung spwohl für große als auch für kleine Anlagen einsetzbar ist.

Ein Ausführungsbeispiel der Erfindung ist in der Zeichnung dargestellt und wird im folgenden näher erläutert. Es zeigen:

Figur 1 im Längsschnitt eine Vorrichtung gemäß der Erfindung und

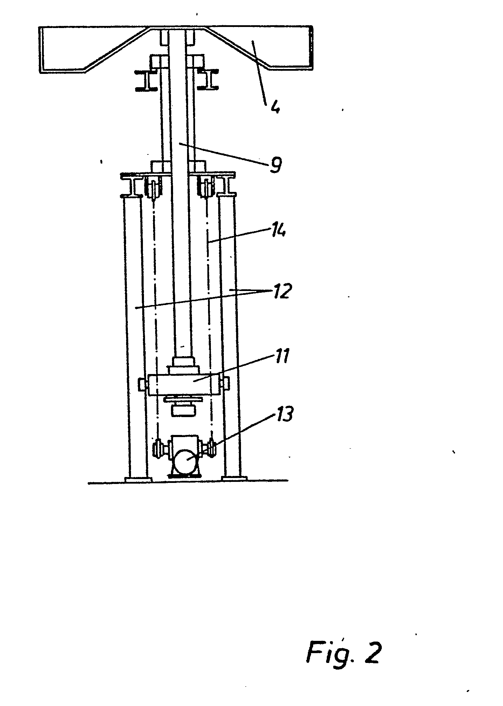

Figur 2 die dazu gehörende Seitenansicht.

Der in der Zeichnung dargestellte Reaktor dient zur thermischen Zersetzung von Altreifen. In den oberen Teil dieses Reaktors mündet eine nur schematisch angedeutete Eintragsschleuse 1 für das Einsatzgut ein. Im Unterteil des Reaktors ist ein geschlossener waagerechter Anströmboden 2 vorgesehen. Durch den Anströmboden 2 sind Düsen 3 geführt, die den Reaktionsraum mit einem Luftkasten 4 verbinden. Oberhalb des Anströmbodens 2 befindet sich eine Sandwirbelschicht, die durch das Einblasen von Luft durch die Düsen 3 in einen Wirbelzustand versetzt wird. In der so gebildeten Wirbelschicht 5 werden die Altreifen thermisch zersetzt, wobei die notwendige Wärme durch eine Teilverbrennung der Altreifen aufgebracht wird. Das bei der thermischen Zersetzung der Altreifen entstehende Produktgas wird über eine Produktgasleitung 6, die im oberen Teil des Reaktors vorgesehen ist, abgeführt.

Die aus der Drahtarmierung der Altreifen bestehenden magnetisierbaren Bestandteile werden mit Hilfe eines Elektromagneten 7 innerhalb der Wirbelschicht 5 gesammelt. Dieser ringförmig ausgebildete Elektromagnet 7 ist wassergekühlt und in einem Rührarm 8 eingebaut. Der Rührarm 8 ist an einer vertikal angeordneten Welle 9 befestigt. Zum Gewichtsausgleich kann der Rührarm 8 auf der dem Elektromagneten 7 abgewandten Seite mit einem Kontergewicht versehen sein. Das Kontergewicht kann auch durch einen zweiten Elektromagneten ersetzt werden.

Im dargestellten Fall ist die Welle 9 von unten durch den Anströmboden 2 geführt. Der Rührarm 8 mit dem eingebauten Elektromagneten 7 ragt in die Wirbelschicht 5 oberhalb des Anströmbodens 2 hinein. Es ist ebenso gut möglich, die Welle 9 mit dem Rührarm 8 und dem Elektromagneten 7 von oben durch den Oberteil des Reaktors in die Wirbelschicht 5 einzuführen.

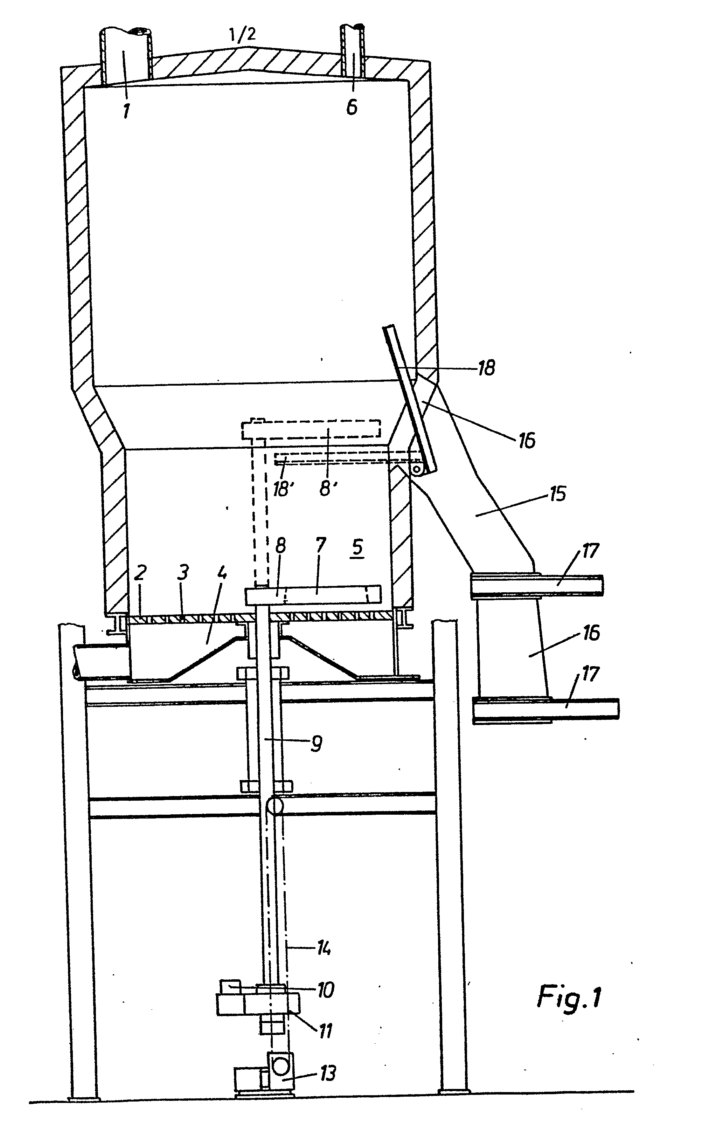

Die Welle 9 ist mit einem elektrischen Antrieb 10 versehen, um eine Drehbewegung zu erzeugen. Dabei kann der Drehsinn des Rührarms 8 ständig der gleiche sein. Die Welle 9 und damit der Rührarm 8 können zunächst um einen bestimmten Winkelbetrag z.B. um 360° in einem Drehsinn gedreht werden. Anschließend wird der Drehsinn umgekehrt. Während der horizontalen Drehbewegung sammelt der Elektromagnet die in Richtung auf den Anströmboden 2 absinkenden, magnetisierbaren Bestandteile auf. Nach einer vorgegebenen Verweilzeit innerhalb der Wirbelschicht 5 wird der Elektromagnet aus der Wirbelschicht 5 in vertikaler Richtung herausgefahren. Zu diesem Zweck ist nach dem dargestellten Ausführungsbeispiel, die Welle 9 in einem Querhaupt 11 drehbar gelagert, das den Antrieb 10 für die Drehbewegung der Welle 9 trägt. Das Querhaupt 11 ist seitlich zwischen zwei vertikalen Säulen 12 geführt. An das Querhaupt 11 greift ein über einen Elektroantrieb 13 angetriebenen Seilzug 14 an. Anstelle eines Seilzuges kann auch eine hydraulische Hubeinrichtung eingesetzt werden. Mit Hilfe des Seilzuges 14 wird das Querhaupt 11 vertikal soweit angehoben, daß der Rührarm 8 zusammen mit dem Elektromagneten 7 aus der Wirbelschicht 5 in eine Endstellung oberhalb einer im folgenden zu beschreibenden, horizontal einschwenkbaren Auswurfklappe gehoben wird. Die obere Endstellung des Rührarmes 8 ist in Figur 1 durch den gestrichelten Linienzug 8' angedeutet.

Oberhalb der Wirbelschicht 5 ist seitlic an dem Reaktor ein Schacht 15 angesetzt, dessen Unterteil als Schleuse 16 ausgebildet ist. Die Schleuse 16 ist durch zwei Schieber 18 oder Klappen verschließbar. Bei der Verwendung des Reaktors für ein Schwelverfahren ist der Schacht 15 mit einer Außenbeheizung versehen. Auf diese Weise wird verhindert, daß sich Kondensate aus dem Produktgas auf der Wandung des Schachtes 15 niederschlagen. Der Schacht 15 kann auch unmittelbar an der Innenwand des Reaktors in Höhe der Wirbelschicht 5 vorgesehen sein. Bei dieser Ausführungsform kann die aus dem Wirbelschacht 5 abstrahlende Wärme ausreichen, den Schacht 15 so warm zu halten, daß sich in ihm keine Kondensate niederschlagen können.

Zum Reaktorinneren hin ist der Schacht 15 durch eine um eine horizontale Achse schwenkbaren Auswurfklappe 18 verschlossen. Die Achse befindet sich in einer Höhe unterhalb der oberen Endstellung des Rührarmes. Die Abwurfkante der Abwurfklappe 18 ragt in den Schacht 15 hinein. Die Auswurfklappe 18 kann schaufelförmig ausgebildet sein und somit als Schurre dienen.

Die Auswurfklappe 18 wird in den Reaktionsraum eingeschwenkt und befindet sich in dieser Stellung, wie durch den gestrichelten Linienzug 18' angedeutet, unterhalb der oberen Endstellung des Rührarmes 8 mit dem Elektromagneten 7. Wenn ein Auswurfvorgang eingeleitet wird, wird der Rührarm 8 mittels des Elektroantriebes 13 in vertikaler Richtung aus der Wirbelschicht 5 herausgefahren. Der Rührarm 8 befindet sich dabei in einer solchen Stellung, daß keine Kollision mit der Auswurfklappe 18 eintritt, die gleichzeitig in den Reaktionsraum eingeschwenkt wird. Nachdem die Auswurfklappe 18 eingeschwenkt ist, und der Rührarm 8 sich in der oberen Endstellung befindet, wird der Rührarm 8 mit dem Elektromagneten 7 in eine Stellung oberhalb der Auswurfklappe 18 gedreht. Nach dem Abschalten des Erregerstromes des Elektromagneten 7 fallen die aufgesammelten, magnetisierbaren Bestandteile auf die Auswurfklappe 18. Danach wird der Rührarm 8 wieder gedreht und in die Wirbelschicht gefahren und die Auswurfklappe 18 hochgeschwenkt. Die magnetisierbaren Bestandteile gelangen so in den seitlichen Schacht 15, aus dem sie über die Schleuse 16 abgezogen werden. Um ein Austreten von Produktgas zu verhindern, ist die Schleuse 16 mit einem Inertgasanschluß versehen.

Die Schleuse 16 kann auch so ausgebildet sein, daß der Schacht 15 in einem mit Wasser gefüllten Trog endet. In diesem Wasserbad sinken die aus dem Reaktor geförderten magnetisierbaren Bastandteile ab. Sie können dann über einen durch den Trog geführten Kratzbandförderer entfernt werden.

- 1 -

PATENTANSPRÜCHE:

1. Verfahren zum Abführen von magnetisierbaren, im Einsatzgut vorhandenen Bestandteile aus einem Wirbelschichtreaktor, dadurch g e k e n n z e i c h n e t , daß durch die Wirbelschicht ein Elektromagnet geführt wird, daß nach einer einstellbaren Verweilzeit der Elektromagnet vertikal aus der Wirbelschicht über eine in den Reaktionsraum eingeschwenkte Auswurfklappe gefahren wird, daß in dieser Stellung der Erregerstrom des Elektromagneten abgeschaltet wird und daß anschließend die Auswurfklappe zurückgeschwenkt wird.

2. Vorrichtung zur Durchführung eines Verfahrens nach Anspruch 1, dadurch g e k e n n z e i c h n e t , daß ein abschaltbarer Elektromagnet (7) in einen Rührarm (8) eingebaut ist, daß der Rührarm (8) horizontal drehbar und vertikal verfahrbar ist und daß in den Reaktionsraum eine Auswurfklappe (18) einschwenkbar ist, deren Schwenkachse sich in einer Höhe unterhalb der oberen Endstellung des Rührarmes (8) befindet und deren Abwurfkante innerhalb eines sich seitlich an den Reaktionsraum anschließenden Schachtes (15) vorgesehen ist.

3. Vorrichtung nach Anspruch 2, dadurch g e k e n n z e i c h n e t , daß der Rührarm (8) an einer drehbaren und vertikal verschiebbaren Welle (9) befestigt ist, die von unten durch den Anströmboden (2) in die Wirbelschicht (5) geführt ist und daß die Lagerung und Führung der Welle (9) sowie die Antriebe sich unterhalb des Reaktors befinden.

4. Vorrichtung nach Anspruch 2, dadurch g e k e n n - z e i c h n e t , daß die drehbare und vertikal verschiebbare Welle (9) nach oben durch den Reaktor nach außen geführt ist und daß die Lagerung und Führung der Welle (9) sowie die Antriebe sich oberhalb des Reaktors befinden.

5. Vorrichtung nach den Ansprüchen 2 bis 4, dadurch g e k e n n z e i c h n e t , daß der Elektromagnet (7) gekühlt ist.

6. Vorrichtung nach den Ansprüchen 2 bis 5, dadurch g e k e n n z e i c h n e t , daß der Antrieb (10) für die Drehbewegung der Welle (9) auf einem seitlich geführten Querhaupt (11) angebracht ist, das zusammen mit der Welle (9) vertikal verschiebbar ist und in dem die Welle (9) drehbar gelagert ist.

7. Vorrichtung nach den Ansprüchen 2 bis 6, dadurch g e k e n n z e i c h n e t , daß der Drehsinn des Rührarmes (8) innerhalb der Wirbelschicht (5) ständig gleich ist.

8. Vorrichtung nach den Ansprüchen 2 bis 6, dadurch g e k e n n z e i c h n e t , daß der Drehsinn des Rührarmes (8) innerhalb der Wirbelschicht (5) nach Durchlaufen eines bestimmten Winkels umkehrbar ist.

9. Vorrichtung nach den Ansprüchen 2 bis 8, dadurch g e k e n n z e i c h n e t , daß die Auswurfklappe (18) schaufelförmig ausgebildet ist.

10. Vorrichtung nach Anspruch 2, dadurch g e k e n n -
z e i c h n e t , daß in Verbindungen mit Schwelverfahren der seitliche Schacht (15) mit einer
Außenbeheizung versehen ist.

11. Vorrichtung nach Anspruch 2, dadurch g e k e n n -
z e i c h n e t , daß der seitliche Schacht (15)
unmittelbar an der Innenwand des Reaktors in Höhe
der Wirbelschicht (5) vorgesehen ist.

12. Vorrichtung nach Ansprüchen 2, 10 und 11, dadurch
g e k e n n z e i c h n e t , daß der seitliche
Schacht (15) mit einem Schleusenaustragsystem
versehen ist.

13. Vorrichtung nach den Ansprüchen 2, 10 bis 12,
dadurch g e k e n n z e i c h n e t , daß das
Schleusenaustragssystem durch Schieber (17) oder
Klappen gebildet ist und daß das Schleusenvolumen
mit einem Anschluß für Inertgas versehen ist.

14. Vorrichtung nach den Ansprüchen 2, 10 bis 12, dadurch g e k e n n z e i c h n e t , daß das
Schleusenaustragssystem durch einen mit Wasser
gefüllten Trog gebildet ist, durch den ein Kratzbandförderer geführt ist.

0022137

1/2

Fig.1

Fig. 2

**Europäisches Patentamt**

**EUROPÄISCHER RECHERCHENBERICHT**

| KLASSIFIKATION DER ANMELDUNG (Int Cl.) |
|---|
| B 29 H 19/00 |
| B 03 C 1/02 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| E,D | DE - A - 2 826 918 (DEUTSCHE BAB- COCK)(Anmeldetag: 20-06-1978) (Offenlegungstag: 10-01-1980)<br><br>* Seite 5, Absatz 1; Seite 7, Absatz 1; Seite 11, Absatz 1; Abbildung 4 *<br><br>-- | 1 |
| A | DE - A - 2 658 371 (CARL ROBERT ECKELMANN)<br><br>* Abbildung 9 *<br><br>-- | |
| A | CONSERVATION & RECYCLING, Band 3, Nr. 3, 1979, Seiten 155-164 Oxford, G.B. T. ARAKI et al.: "Development of fluidized-bed pyrolysis of waste tires"<br><br>* Kapitel 4, Seiten 161-162; Abbildung 8 *<br><br>-- | |
| A | GB - A - 903 846 (ENGLISH CLAYS) | |
| A | DE - A - 2 365 078 (KARL MERZ MASCHINENFABRIK)<br><br>---- | |

| RECHERCHIERTE SACHGEBIETE (Int. Cl.³) |
|---|
| B 01 J 8/42 |
| B 03 C 1/02 |
| 1/06 |
| 1/30 |
| B 29 H 19/00 |
| 19/04 |
| H 01 B 15/00 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 17-10-1980 | SIEM |